# EUROPEAN PATENT APPLICATION

(11) **EP 4 764 996 A1**
(43) Date of publication of application: **24.06.2026**
(21) Application number: 24307247.7
(22) Date of filing: 20.12.2024
(51) Int. Cl.: G06Q 20/36, G06Q 20/38, G06F 21/62, G06F 21/31, H04L 9/32

(54) **METHOD FOR DETECTING OUTDATED ATTRIBUTES IN A WALLET**

(71) Applicant: THALES DIS FRANCE SAS, 92190 Meudon (FR)
(72) Inventor: COMPARIN, Débora, 92120 Montrouge (FR); BRUNA, Hugo, 13000 Praha (CZ); SADAGOPAN, Sridharan, 68027 Singapore (SG)
(74) Representative: Quintero Romero, Manuel

(57) **Abstract**

The invention relates to a method for detecting outdated attributes in a wallet comprising existing credentials, wherein the method comprises the steps of:
• onboarding, by the wallet, a new credential comprising up-to-date attributes,
• computing, by the wallet, a mapping mechanism between each of the up-to-date attributes with every attribute of the existing credentials, the mapping mechanism resulting in a mapping table loosely coupling every attribute of the new and existing credentials with one or more of the other attributes,
• detecting, by the wallet, if any of the attributes of the pre-existing credentials are associated with any of the up-to-date attributes of the new credential, and, if so, comparing their values,
• for each of the pre-existing attributes whose values do not relate to the value of the associated up-to-date attributes, tagging them as potentially outdated and triggering a pre-established action to confirm their status or bring them up to date.

## Description

### TECHNICAL FIELD

The present invention relates to the field of digital wallets storing multiple credentials and, in particular, to ways of maintaining the consistency between different attributes from different credentials. In advantageous embodiments, the wallet detects autonomously outdated attributes and implements issuer-defined actions accordingly.

### BACKGROUND OF THE INVENTION

An *attribute* refers to any characteristic that is proper to a given person (either natural or legal). The attributes are typically issued by an issuing authority (e.g., governments or institutions), that enable person's authentication (e.g., given name, surname, address, citizenship, birthdate, age, etc.) or proves he/she has certain claims e.g., education qualifications, driver license status, driver license type, real estate deed, health insurance identification, can travel to certain countries, etc. Such personal attributes are usually written on physical credentials, such as an ID card, passport, driving licenses, Visas, etc. or stored in an electronic way in personal hardware tokens such as electronic identity card, i.e., elD card.

With the emergence of online services, and seeking user-friendliness, these attributes tend to be further represented in a digital form and securely stored in digital wallets. In short, the *issuer* (e.g., still governments or institutions) asserts certain attributes about the wallet's *holder,* thus creating a *credential* containing these claims, and transmits / issues the verifiable credential to the holder, which securely stores it in its *wallet.* When the holder wishes to selectively disclose his/her attributes to a *verifier,* it generates a *Presentation* (similar schema than the credentials) that the verifier can validate.

Despite the above well-established ecosystem, the particulars about how to encode and transmit the data, process requests, or verify information depends on the specific format chosen. Among all the existing ones, ISO/IEC 18013-5 specification and W3C's Verifiable Credentials Data Model v2.0 specification are widely used today, each defining a different attribute schema (i.e., structure, logical organisation, type and namespace(s) of the attested attributes), data format (i.e., the way data is formatted in the credentials) and proof mechanisms (i.e., how to attest credentials for integrity and authenticity).

There are today efforts towards making these two standard formats interoperable giving rise to multiple attribute format wallets that will eventually store multiple attributes therein. This is the case of EU Digital Identity (EUDI) wallet and elDAS2 Regulations.

With more credentials coming from different issuers to be stored in the same wallet, it risks having co-existing attributes that do not correspond to each other. Credentials typically have some overlapping information, such as given name, surname, address, national identification number, etc. and a validity of several years. Thus, if the user refreshes or gets a new credential with updated attributes, it may render the remaining ones obsolete as they do not reflect the reality anymore (even if they correspond to their issuer's proprietary database information).

This situation brings incertitude to an ecosystem that is built on trust (i.e., cryptographic trust) and hence may affect its adoption. Therefore, there is a need in the industry for a method to detect inconsistencies among the attributes stored in the same wallet.

### SUMMARY OF THE INVENTION

The present invention provides a solution for the aforementioned problems by a method for detecting outdated attributes in a wallet comprising existing credentials according to claim 1, a method to present a credential comprising outdated attributes to a verifier according to claim 9, a wallet according to claim 11, and a credential according to claim 13. In dependent claims, preferred embodiments of the invention are defined.

In a first inventive aspect, the invention provides a method for detecting outdated attributes in a wallet comprising existing credentials. The method comprises the steps of:
- onboarding, by the wallet, a new credential comprising up-to-date attributes,
- computing, by the wallet, a mapping mechanism between each of the up-to-date attributes with every attribute of the existing credentials, the mapping mechanism resulting in a mapping table loosely coupling every attribute of the new and existing credentials in association with one or more of the other attributes, and
- detecting, by the wallet, if any of the attributes of the pre-existing credentials are associated with any of the up-to-date attributes of the new credential, and, if so, comparing their values,
- for each of the pre-existing attributes whose values do not relate to the value of the associated up-to-date attributes, tagging them as potentially outdated and triggering a pre-established action to confirm their status or bring them up to date.

Throughout this description, the *wallet* is an identity wallet (e.g., EUDI wallet) capable of storing one or more digital credentials (e.g., Personal Identification Data -PID-, driving license, passport, etc.) issued by the same or different issuers (e.g., governments, public agencies, or private companies) with the information contained in their official databases, for specific identification purposes (e.g., specific identification contexts) or generally (i.e., purpose-agnostic). The wallet can preferably support ISO/IEC 18013-5 specification, W3C's Verifiable Credentials Data Model v2.0, and others standard formats.

As mentioned, an *attribute* refers to some characteristic that is proper to the wallet's holder (either natural or legal person). The personal attributes may advantageously encompass Personal Identification Data, PID, which are attributes that are commonly defined by some authority, such as a government identity, as necessary to uniquely identifying a person and that can be issued as a single credential.

These attributes are *on-boarded* on the user wallet. That is, the issuer (or associated trustable delegatee) transfers, extracts or derives the user's personal attribute(s) from their officially accepted location (e.g., Government register, passport, elD card, etc.) in form of a credential to a separate entity, e.g., holder's wallet in his/her mobile phone, for their storage and equally acceptable usage via attribute verification. During the onboarding, the issuer and wallet attest that the other is trustable (e.g., through certificates, signatures, integrity checks) and that the attributes are genuine. The credentials are issued with a validity period, but can be revoked before expiration by e.g., the issuer itself.

The user wallet may be embodied, preferably, as a user device such as a smartphone, a desk computer, a laptop, a touchpad, a personal digital assistant, or any other device having adequate processing capabilities and communication interfaces, such as described hereafter, storing or including a digital wallet (either software or hardware). The digital wallet may be an application locally stored on the user device or remotely accessed (e.g., web-browser based application) by the user device. In an embodiment, the digital wallet is associated with, or include in, a digital safe, a secure enclave or a secure element, SE. The data stored in the e.g., digital safe can only be accessed, read and write, by the digital wallet, so that other applications cannot access this data without requesting access to the digital wallet.

Referring to the invention, when the user onboards a new credential that may contain "overlapping" attributes with the existing ones in other stored credentials, the wallet detects if any of the values of these attributes have changed vis-a-vis the pre-existing ones and, if so, tags the affected ones as potentially obsolete. In particular, the wallet computes a mapping mechanism based on hashing, direct comparison, and/or semantic affinity to find the attributes associations and verify obsoletion.

This allows preventing inconsistencies and keeps the various attributes accurate and in synchronization. At a result of the mapping mechanism, the attributes have a self-describing, loosely coupled, dynamic referencing and contextual binding with each other.

In a particular embodiment, the mapping mechanism computes hashes of each of the up-to-date attributes and compares them with hashes of every attribute of the existing credentials. The wallet can keep the mapping table with the pre-computed hashes of the existing attributes or run everything over after each new onboarding.

Alternatively, or additionally, in a particular embodiment, the mapping mechanism is based on semantic affinity of the up-to-date attribute names with regard to every attribute of the existing credentials. For instance, the wallet stores a dictionary with pre-established relationships such as *address* - *geography* - *residency*, or *diploma* - *education* - *title* - *expertise* (or derivations thereof).

In a preferred embodiment, the loosely coupling of the mapping table items is based on any of the following types of relationships: 'divergent' when the attribute's meaning encompasses other narrower attributes, 'convergent' when the attribute's meaning concretizes other broader attributes, and 'eclipse' when the attribute's meaning matches another attribute's meaning. This advantageously allows linking not exactly matching but still related attributes.

Unlike alternative solutions where the user can simply notice that there are some discrepancies and voluntarily request credential re-issuance to harmonize its attributes, the present invention introduces a detection mechanism that systematically and actively checks for discrepancies, and triggers issuer-defined actions in case any is found. What happens to an allegedly obsolete attribute can be setup by the issuer at attribute metadata level during issuance. For instance, in an embodiment, the up-to-date attributes of the new credential comprises attribute-level metadata setup by the issuer defining at least the action to be triggered if considered as potentially outdated.

In a particular embodiment, the pre-established action is defaulted as notifying the user about status the potentially outdated status of the attribute. This is in line with making user aware of his/her attributes and requesting consent for further actions.

That is, the defaulted action can be simply notifying the user, implicitly suggesting re-issuance, but the issuer can have introduced through attribute metadata further conditions in case some of its issued attributes gets outdated such as mandatorily get a fresh credential or, alternatively, allowing the creation of a verifiable update to still be able to use outdated attributes as long as they can be linked with up-to-date ones. In particular, the issuer can define with which kind of attributes (e.g., coming from specific issuers) the verifiable update linking is possible.

Thus, the present invention synthetically extends the validity of some credentials with obsolete attributes, that is, the wallet may autonomously bring up-to-date some attributes within preferably an issuer-defined framework that otherwise, in absence of the invention, may require straight re-issuance. The bigger the adoption of digital identity wallets, the more credentials are to be issued by different issuers and, hence, an eventual need for frequent re-issuance / refreshing for every outdated attribute can become a bottleneck for the system (i.e., issuers architectures overwhelmed by requests).

Since it is the issuer who decides which attributes must be always up-to-date, allowing less critical attributes to be either obsolete until credential expiration or linked with others through verifiable updates, the invention offloads the issuing systems.

When the user is notified about a potentially outdated attribute and confirms the outdate status, the issuer can be similarly notified upfront. This helps with back job scheduling in case an automatic reissuance is mandatory, or keeping issuer informed about that its proprietary database may be obsolete and shall need to be updated before any possible re-issuance.

In a particular embodiment, the pre-established action comprises a re-issuance request for the one or more credentials comprising outdated attributes. The re-issuance request may be mandatory, automatically rendering the affected outdated credential as revoked (or somehow disabled). This re-issuance request may be through user prompting and consenting or via direct notification and connection to issuer's end.

In an alternative embodiment, the pre-established action comprises a creating a verifiable update cryptographically linking outdated attributes with associated up-to-date attributes to be included during a verifiable presentation.

Advantageously, the wallet notifies the user and/or trigger the verifiable update request based on the pre-defined action.

In a second inventive aspect, the invention provides a method to present a credential comprising outdated attributes to a verifier, the method comprising the steps of:
- receiving, by the wallet, a presentation request from the verifier, wherein the presentation request comprises one or more attributes that the verifier wishes to access to,
- receiving, by the wallet, user consent to disclose one or more of the attributes that the verifier requested to access to,
- checking, by the wallet, if any of the attributes to be presented is outdated, and, if so,
- generating a verifiable update according to some embodiments of the first inventive aspect, wherein the verifiable update cryptographically links the outdated attribute with associated up-to-date attributes to be included during the presentation,
- preparing, by the wallet, the presentation comprising the outdated attributes, the associated up-to-date attributes, and the verifiable update, and
- sending back, by the wallet, the presentation to the verifier.

The holder presents the required attribute (i.e., outdated), a non-required attribute (i.e., up-to-date) and the verifiable update linking both. The verifier can validate the presentation that includes the original attribute, the up-to-date attribute and verifiable update that reflects the latest state of attributes. Similarly, depending on the credential formatting, especially when selective disclosure is not available, the holder can prepare the presentation with the entire credential containing one or more outdated claims, then linking them with up-to-date ones in other credentials.

This advantageously avoids the user to re-contact issuer(s) to update / refresh / re-issue each credential that is impacted by an update, thus drastically minimizing processing time and costs to handle these obsoletions.

If the re-issuance is set as mandatory, in a particular embodiment, the wallet sends to the issuer only the outdated attribute(s) with the new value(s) and the issuer, upon updating its records, shall provide its acknowledgement (e.g., through its signature). Then, the wallet may perform itself the update of attributes together with the issuer's signature. This is further compliant with privacy best practices since the issuer only accesses the specific attribute(s) that needs to be updated rather than the complete credential holding it.

In a particular embodiment, the verifier receives the presentation, and replaces the outdated attributes with the associated up-to-date attributes according to the verifiable update.

In a third inventive aspect, the invention provides a wallet for detecting outdated attributes in existing credentials, wherein the wallet is configured to:
- onboard a new credential comprising up-to-date attributes,
- compute a mapping mechanism between each of the up-to-date attributes with every attribute of the existing credentials, the mapping mechanism resulting in a mapping table loosely coupling every attribute of the new and existing credentials in association with one or more of the other attributes,
- detect if any of the attributes of the pre-existing credentials are associated with any of the up-to-date attributes of the new credential, and, if so, comparing their values,
- for each of the pre-existing attributes whose values do not relate to the value of associated up-to-date attributes,
   ∘ tag them as potentially outdated and
   ∘ trigger a pre-established action to confirm their status or bring them up to date.

In a particular embodiment, the mapping mechanism
• computes hashes of each of the up-to-date attributes and compares them with hashes of every attribute of the existing credentials, and/or
• is based on semantic affinity of the up-to-date attribute names with regard to every attribute of the existing credentials.

In a fourth inventive aspect, the invention provides a credential with up-to-date attributes according to any of the embodiments of the third inventive aspect. In particular, the up-to-date attributes comprise attribute-level metadata setup by the issuer defining at least the action to be triggered if considered as potentially outdated.

Preferably, this credential is formatted as a Verifiable Credential or according to ISO/IEC 18013-5 (i.e., mDL). These attribute metadata are defined in JSON, JSON-LD and CDDL formats and are understandable by the wallet because the proposed additioned metadata is compatible with the specifications of Verifiable Credential and ISO/IEC 18013-5. The wallet that has not yet implemented the proposed mechanism in this invention would not be affected by these additional metadata and would continue the normal operation.

All the features described in this specification (including the claims, description, and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Fig. 1: illustrates a multi-credential wallet onboarding different credentials from different users;
- Fig. 2: illustrates schematically the attribute relationships according to an embodiment of the invention;
- Fig. 3: illustrates a schematic flowchart to detect outdated attributes in a wallet comprising existing credentials according to an embodiment of the invention;
- Fig. 4: illustrates a schematic flowchart to present a credential comprising outdated attributes to a verifier according to an embodiment of the invention;
- Fig. 5: illustrates schematically a credential with up-to-date attributes to be onboarded into a wallet according to an embodiment of the invention; and
- Fig. 6: illustrates schematically a presentation comprising outdated attributes, up-to-date attributes and a verifiable update according to an embodiment of the invention.

### DETAILED DESCRIPTION OF THE INVENTION

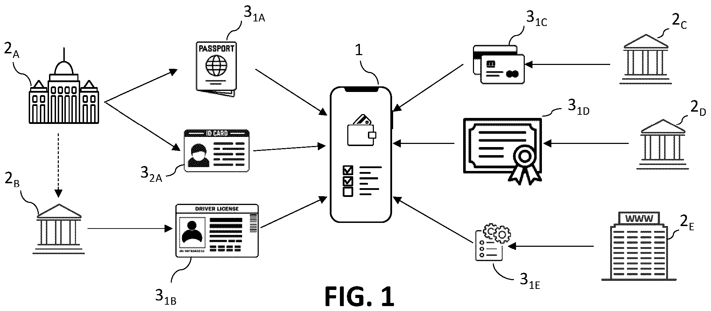

In **figure 1**, it is depicted a multi-credential wallet 1 capable of onboarding many different credentials 3_{1A} ... 3_{1E} coming from different issuers 2_{A} ... 2_{E}. In particular, there are governments 2_{A} issuing passports 3_{1A} and ID cards 3_{2A}, public agencies 2_{B} (e.g., Ministry of Interior or Ministry of Transport) issuing mobile driver licenses 3_{1B}, banks 2_{C} issuing credit/debit cards 3_{1C}, institutions 2_{D} issuing diplomas 3_{1D}, and even online service providers 2_{E} submitting credentials 3_{1E} (e.g., formatted as Verifiable Credentials) that assert memberships, certain payments, health conditions, insurance, etc.

As known, these credentials 3_{1A} ... 3_{1E} can be formatted as per ISO/IEC 18013-5 specification (i.e., mDL doc), W3C's Verifiable Credentials Data Model v2.0 (i.e., VC), etc. thus the wallet 1 supports, preferably, all these standards for attribute onboarding and presentation.

For instance, the credentials contain certain personal attributes about the wallet's holder that are the claims asserted by the different issuers 2_{A} ... 2_{E}. Preferably, the wallet contains or is about to onboard a PID credential comprising the minimum set of attributes needed to legally identify the holder, and other further credentials.

For exemplary purposes, it is considered that the wallet already contained educational credentials, e.g., diplomas 3_{1D}, and membership credential, e.g., sport centre 3_{1E}, issued several years ago. however, the user has just changed his/her home and needs to update his/her home address. He/she has then voluntarily contacted the issuer, submitted proof of residency, and requested updating e.g., his/her passport 3_{1A}.

Be as it may, the issuer is about to on-board the new credential, i.e., PID credential, containing up-to-date attributes when at least one of them has been updated ("HomeAddress" in this example). Upon receiving the new credential, the wallet 1 computes the mapping mechanism between each of the up-to-date attributes and every other attribute from the existing credentials in the wallet.

Preferably, the mapping mechanism computes hashes of each of the newly onboarded up-to-date attributes and compares them with hashes of every other attribute from the existing credentials. These hashes are stored in the resulting mapping table for further usage.

This is particularly advantageous when the new credential is re-issued or refreshed, as the wallet stores the previous mapping (i.e., with expired attributes) and re-checks if any of the newly onboarded (i.e., replacing) attributes has a different hash than the previous ones (i.e., from the expired or revoked credential). If so, it means that the values have been updated and the already mapped attributes are potentially outdated.

Also, the mapping mechanism can find less-evident attributes relationships based on semantic affinity. That is, the wallet stores a dictionary with pre-established relationships of neighbouring meanings or broad-narrow equivalencies. This is particularly advantageous for new types of credentials.

Running the mapping mechanism gives rise to a mapping table (see the example of Table 1) comprising every attribute of the new and existing credentials in association with one or more of the other attributes. The attributes have a self-describing, loosely coupled, dynamic referencing and contextual binding. Preferably, the mapping table is stored in the wallet as a dictionary using (fully) qualified attribute names (i.e., with full namespace) as keys to retrieve the referenced attributes names, and the associated metadata shadow level, action and computed hash values.

**Table 1 - Mapping table with attributes relationships.**

| **Attribute** | **Attribute metadata** | | |
|---|---|---|---|
| | **Referenced Attribute** | **Shadow Level** | **Hash Pointer Ref.** |
| Id1.attr1 | Id3.attr1, Id2.attr4 | Divergent | Oxddd.. |
| Id1.attr2 | Id3.attr3 | Convergent | Oxeef.. |
| ... | ... | ... | ... |
| IdM.attrN | IdO.attrP | Eclipse | ... |

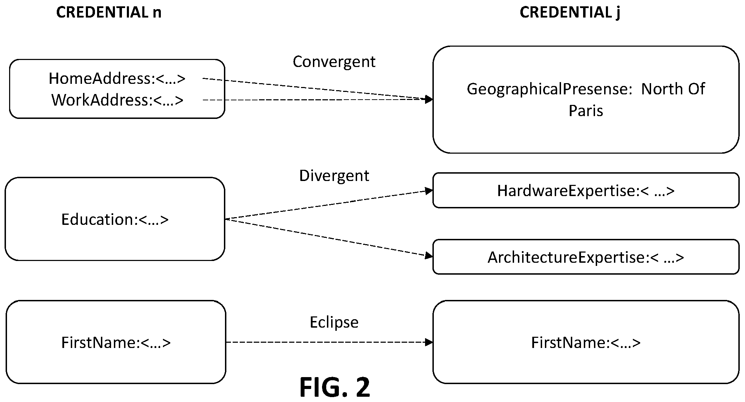

The mapping table items are referenced to each other based on any of the following types of relationships: 'divergent', 'convergent', or `eclipse' as exemplified in **figure 2****.** The relationship 'divergent' refers to when the attribute's meaning encompasses other narrower attributes (e.g., "Education" towards "HardwareExpertise"); 'convergent' when the attribute's meaning concretizes other broader attributes (e.g., "HomeAddress" towards "Residency" or "GeographicalPresence"); and 'eclipse' when the attribute's meaning matches another attribute's meaning ("FirstName" towards "FirstName").

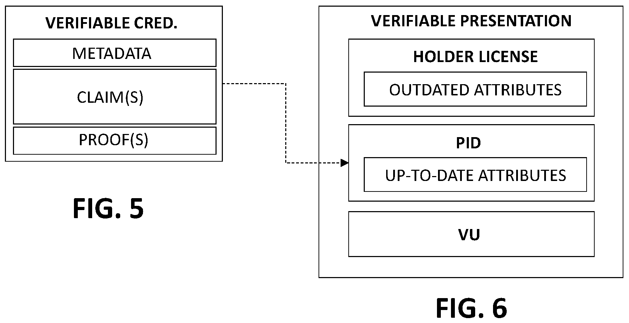

More preferably, the up-to-date attributes of the new PID credential to be onboarded into the wallet comprise attribute-level metadata setup by the issuer defining management requisites, obsoletion conditions, and update triggering actions (see figure 5 for more details). Namely, the attribute metadata defines which action(s) needs to be triggered if the specific attribute is considered as potentially outdated by the wallet.

For instance, the issuer may decide that, to keep consistency among the attributes it issued, an immediate re-issuance would be needed in case any wallet detects any discrepancy with recently onboarded credentials. In an embodiment, the wallet may revoke or shorten the validity period of the affected credential with obsolete attribute(s).

By default, the wallet's holder gets a notification about the potentially obsolete attributes already in the wallet with regard to the recently onboarded credential. The notification can be informative, or further requesting user's confirmation. The issuers can setup policies and good practices when it comes to deal with potentially obsolete onboarded attributes.

The tagging of the detected obsolete attributes can happen before or after user confirming.

**Table 2 - Mapping table with attributes relationships and actions.**

| **Attribute** | **Attribute metadata** | | | |
|---|---|---|---|---|
| | **Ref. Attribute** | **Shadow Level** | **Hash Pointer Ref.** | **Action** |
| Id1.attr1 | Id3.attr1, Id2.attr4 | Divergent | Oxddd.. | Notification |
| Id1.attr2 | Id3.attr3 | Convergent | Oxeef.. | Trigger Verifiable Update (VU) |
| ... | ... | ... | ... | ... |
| IdM.attrN | IdO.attrP | Eclipse | ... | Mandatory re-issuance |

As shown in table 2, even if the wallet's holder is notified by default, the issuers can define what further actions are to be triggered when specific attributes are deemed obsolete. For instance, one of the pre-established actions may be requesting re-issuance for the one or more credentials comprising outdated attributes. This re-issuance can be mandatory, e.g., automatically rendering the affected outdated credential as revoked (or somehow disabled), or recommending that to the user. The recommendation may be also triggered e.g., when the up-to-date attribute affects a big part of the stored credentials (i.e., surpassing a pre-established threshold), thus ensuring attribute consistency. The issuer can distinguish between 1st rank attributes (e.g., PID-related attributes) and 2nd rank attributes (e.g., hair colour, sight vision, memberships, work address, etc.), i.e., attributes or user claims that are more likely to change often, or less likely to overlap with other credentials (issuer-specific).

In cases when re-issuance is not mandatory, e.g., because the affected attributes are minima, or not often used, another pre-established action can be creating a verifiable update cryptographically linking outdated attributes with associated up-to-date attributes to be included during a verifiable presentation. That is, although the outdated attributes reflect fairly the issuer's proprietary database, the holder's situation has changed during the credential validity and hence the credential does not reflect anymore user's up-to-date reality. In that case, (e.g., colluding) verifiers may deny access to services if the attributes presented are not consistent anymore.

In that case, the invention introduces the verifiable update, that cryptographically links the outdated attributes with associated up-to-date attributes. Similarly, when the formatted credentials do not allow selective disclosure, the verifiable update refers to the credentials with outdated attributes and the associated credentials with up-to-date attributes.

When the issuer allows the use of verifiable updates for synthetically extending the validity of the affected credentials, the wallet initiates a verifiable update process where a list of all outdated attributes are to be linked with the referenced up-to-date ones.

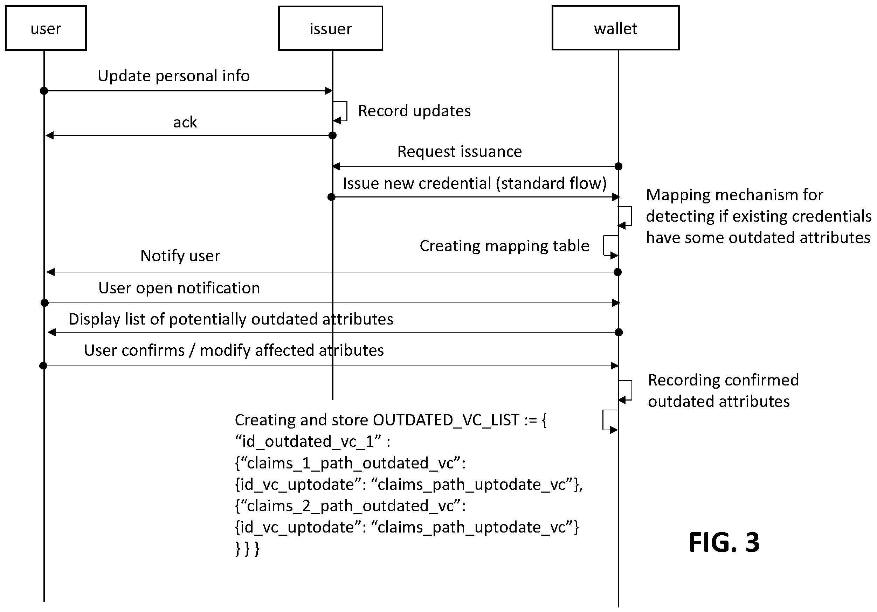

**Figure 3** depicts a schematic flowchart to detect the outdated attributes in the wallet and, if so, trigger the creation of a verifiable update.

As mentioned, the user authenticates to the issuer and requests to update some of his/her personal information in the issuer's proprietary database (e.g., HomeAdress, marital status). The user may need to provide further proof processable by the issuer before definitively updating its database. Since previous user's credential does not match anymore the new submitted information, the issuer revokes the previous credential and re-issues a new one with up-to-date attributes.

The issuer also embeds further instructions about attribute management in the credential. Namely, the issuer defines what shall occur in case any of the just-issued attributes become obsolete, in the sense that they are inconsistent with newly onboarded attributes by the wallet. The issuer may instruct being notified after getting user's confirmation that the attribute is no longer up-to-date; asking for immediate re-issuance, shortening the validity period of the affected credential, or (e.g., for less-critical attributes) allowing their link with up-to-date attributes from new credentials.

The wallet then onboards the new credential through the standard process: issuer-wallet open session (e.g., HTTPS through TLS), mutual authentication, package sent, signature & integrity verification, acknowledgments, etc. and the issuer registers that the credential (i.e., its identifier) has been successfully onboarded into the wallet (i.e., associated with wallet's certificate).

The wallet then stores the new credential, e.g., replacing the former one, computes hashes of every new attribute and runs the mapping mechanism. The wallet compares the hashes of every replacing attribute vis-a-vis the former ones (still stored), and the remaining ones in the wallet, giving rise to the mapping table where potential changes are detected.

The wallet notifies the user by default about the allegedly outdated attributes and, optionally, requests his/her confirmation. If the user confirms, the associated issuer-defined actions may be triggered. That is, the issuer may have been defined that a particular 1st rank attribute cannot remain outdated for long time and hence limits the validity of the credential or directly revokes it in order to be immediately re-issued. Alternatively, the issuer can allow outdated attributes usable until credential expiration (e.g., whose expiration is soon, or 2nd rank attributes) or even allow their link with up-to-date attributes with new credentials. The wallet may need user's confirmation to trigger any of these actions.

When the user confirms the outdated attributes and the associated actions for the affected credentials, the wallet records them in an outdated attribute list and proceed with the actions accordingly. For each outdated attribute linkable through verifiable updates, the wallet lists them in an outdated attribute list that can be separate from or jointly to the mapping table.

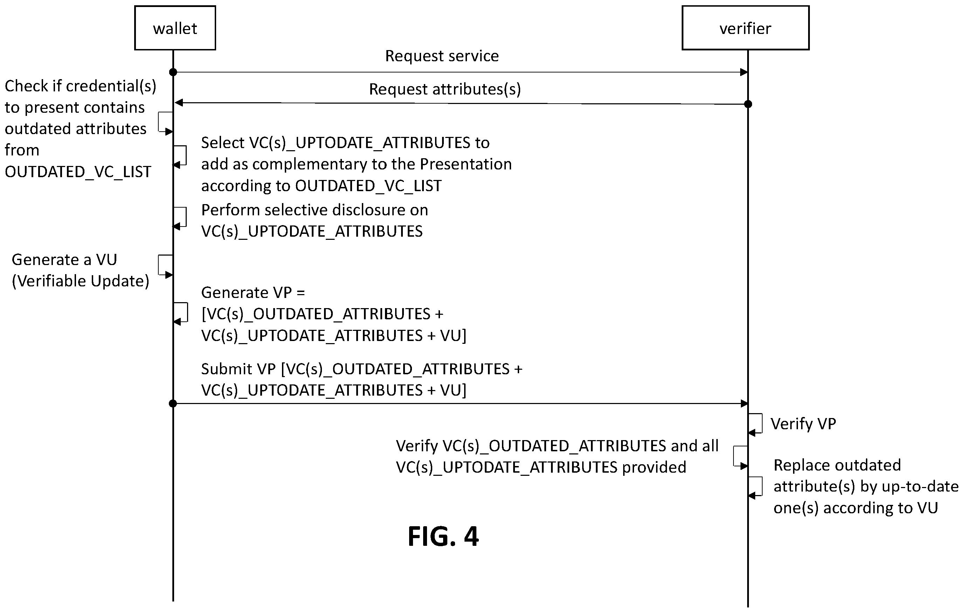

**Figure 4** depicts a schematic flowchart to present a credential comprising outdated attributes to a verifier according to an embodiment of the invention.

As known, the user's wallet wishes to consume some services and hence it is requested to authenticate him/herself to the service provider (known in digital wallets as relying parties, trusted services provider) which uses a verifier to proceed with the collection of user's attributes. The verifiers typically interface wallets through *readers,* which are the physical apparatuses with the necessary equipment to perform mutual authentication with the wallets and collect the attributes. Be as it may, the service provider requests to the wallet certain attributes before granting the service and the wallet preferably prompts the user with these requested attributes for disclosure consent.

Upon user's consent, the wallet checks if any of the attributes to be disclosed was tagged as outdated and, if so, checks if it appears in the outdated attribute list. If so, the wallet selects the credentials that contain the associated up-to-date attributes to add as complementary to the presentation. The wallet may also need to perform a selective disclosure (i.e., through user's consent) on these up-to-date attributes.

The wallet then generates the verifiable update as per below, and generates the presentation by including the outdated attributes and the up-to-date attributes wrapped with the verifiable update. In short, the *verifiable update* is embodied as a list of paths that describe where the credential with outdated attribute(s) is localized in the presentation. Each credential with outdated attribute(s) in the list contains in turn the list of outdated attribute(s) path(s), that describe where the outdated attribute(s) is localized within the credential. Each outdated attribute(s) in the verifiable update is further associated with the path that describe where the credential with up-to-date attribute(s) is localized in the presentation (or identifier(s) of the credential with up-to-date attribute(s)) and the path of the up-to-date attribute of the credential that describe where the up to date attributes is localized in the credential.

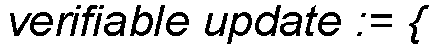

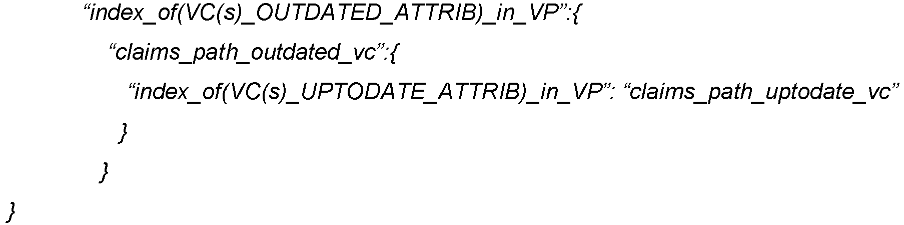

Figure 6 schematically represents an embodiment of a presentation according to the invention. The wallet sends the presentation to the verifier (i.e., through the reader) that processed to verify that it is genuine, provides from the issuer, and none of the attributes included have been tampered. The verifier can also check that both credentials are bound to the same user (e.g., through embedded public keys). If all verifications are successful, the verifier replaces the outdated attributes with the up-to-date and forwards them to the service provider to be match against its service policy, where the service provider can grant or deny the service accordingly.

In **figure 5****,** it is depicted a credential with up-to-date attributes to be onboarded into the wallet. In particular, but not limited to it, the credential is a VC-typed credential comprising metadata, claims(s) (so-called attributes herein), and proof(s). The new VC according to the invention reuse the same logic of a VC-typed but comprises an additional specific attribute in the metadata that describe the policy of update. This policy defined at least which credential and attribute can be used to verify if the attribute of the credential is outdated and the action to perform when the attribute is detected as outdated. This policy is extendable and can comprises more info to be used by the wallet.

Hereafter there is an example of a W3C' VC (e.g., fishing license) highlighting how the metadata 'update_rule' (see wording **in bold**) can be used to define attribute level mapping of relationship and update triggering action by an issuer:

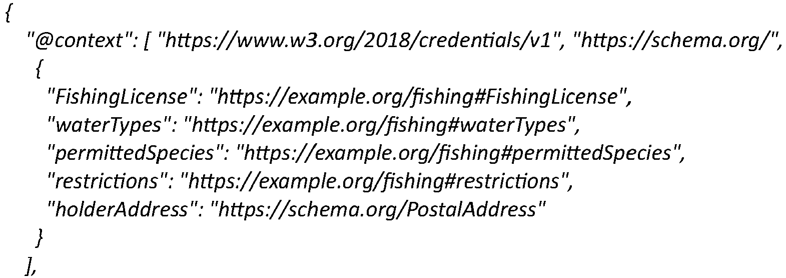

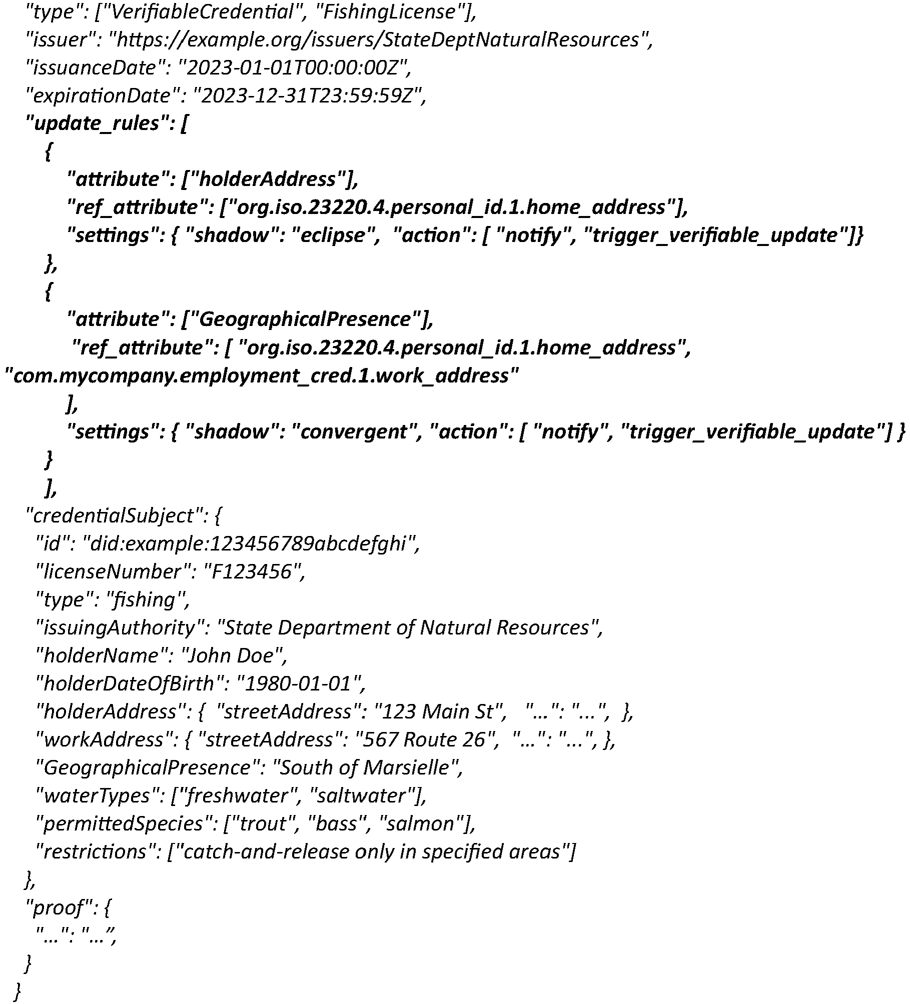

A similar 'update_rule' can be defined in CDDL for ISO 18013-5 credentials as well.

**Figure 6** depicts a presentation, e.g., of the verifiable presentation type, comprising the outdated attributes from a particular credential (e.g., "holder license"), up-to-date attributes from the any subsequently onboarded credential (e.g., "PID" credential) and the verifiable update according to the invention. As exemplary depicted, the subsequently onboarded credential can be the verifiable credential of figure 5.

In turn, the verifiable presentation can be built according to the steps in figure 4. That is, using VC(s)_OUTDATED ATTRIBUTES and the corresponding VC(s)_UPTODATE_ATTRIBUTES together with the VU that indeed describes the mapping between those attributes. The verifier interprets the VU to understand the mapping between outdated attributes and up-to-date attributes and cryptographically verifies the claims thus accepting the attributes brought to date.

## Claims

1. A method for detecting outdated attributes in a wallet comprising existing credentials, wherein the method comprises the steps of:
• onboarding, by the wallet, a new credential comprising up-to-date attributes,
• computing, by the wallet, a mapping mechanism between each of the up-to-date attributes with every attribute of the existing credentials, the mapping mechanism resulting in a mapping table loosely coupling every attribute of the new and existing credentials with one or more of the other attributes, and
• detecting, by the wallet, if any of the attributes of the pre-existing credentials are associated with any of the up-to-date attributes of the new credential, and, if so, comparing their values,
• for each of the pre-existing attributes whose values do not relate to the value of the associated up-to-date attributes, tagging them as potentially outdated and triggering a pre-established action to confirm their status or bring them up to date.

2. The method according to claim 1, wherein the mapping mechanism computes hashes of each of the up-to-date attributes and compares them with hashes of every attribute of the existing credentials.

3. The method according to any of claims 1 or 2, wherein the mapping mechanism is based on semantic affinity of the up-to-date attribute names with regard to every attribute of the existing credentials.

4. The method according to any of claims 1 to 3, wherein the loosely coupling of the mapping table is based on any of the following types of relationships: 'divergent' when the attribute's meaning encompasses other narrower attributes, 'convergent' when the attribute's meaning concretizes other broader attributes, and 'eclipse' when the attribute's meaning matches another attribute's meaning.

5. The method according to any of claims 1 to 4, wherein the pre-established action is defaulted as notifying the user about status the potentially outdated status of the attribute.

6. The method according to any of claims 1 to 5, wherein the pre-established action comprises a re-issuance request for the one or more credentials comprising outdated attributes.

7. The method according to any of claims 1 to 6, wherein the pre-established action comprises a creating a verifiable update cryptographically linking outdated attributes with associated up-to-date attributes to be included during a verifiable presentation.

8. The method according to any of claims 1 to 7, wherein the up-to-date attributes of the new credential comprises attribute-level metadata setup by the issuer defining at least the action to be triggered if considered as potentially outdated.

9. A method to present a credential comprising outdated attributes to a verifier, the method comprising the steps of:
• receiving, by the wallet, a presentation request from the verifier, wherein the presentation request comprises one or more attributes that the verifier wishes to access to,
• receiving, by the wallet, user consent to disclose one or more of the attributes that the verifier requested to access to,
• checking, by the wallet, if any of the attributes to be presented is outdated, and, if so,
• generating a verifiable update according to claim 7, wherein the verifiable update cryptographically links the outdated attribute with associated up-to-date attributes to be included during the presentation,
• preparing, by the wallet, the presentation comprising the outdated attributes, the associated up-to-date attributes, and the verifiable update, and
• sending back, by the wallet, the presentation to the verifier.

10. The method according to claim 9, wherein the verifier receives the presentation, and replaces the outdated attributes with the associated up-to-date attributes according to the verifiable update.

11. A wallet for detecting outdated attributes in existing credentials, wherein the wallet is configured to:
• onboard a new credential comprising up-to-date attributes,
• compute a mapping mechanism between each of the up-to-date attributes with every attribute of the existing credentials, the mapping mechanism resulting in a mapping table loosely coupling every attribute of the new and existing credentials with one or more of the other attributes,
• detect if any of the attributes of the pre-existing credentials are associated with any of the up-to-date attributes of the new credential, and, if so, comparing their values,
• for each of the pre-existing attributes whose values do not relate to the value of associated up-to-date attributes,
∘ tag them as potentially outdated and
∘ trigger a pre-established action to confirm their status or bring them up to date.

12. The wallet according to claim 11, wherein the mapping mechanism
• computes hashes of each of the up-to-date attributes and compares them with hashes of every attribute of the existing credentials, and/or •is based on semantic affinity of the up-to-date attribute names with regard to every attribute of the existing credentials.

13. A credential with up-to-date attributes to be stored in a wallet according to any of claims 11 or 12, wherein the up-to-date attributes comprise attribute-level metadata setup by the issuer defining at least the action to be triggered if considered as potentially outdated.
